# EUROPEAN PATENT APPLICATION

(11) **EP 1 375 299 A1**
(43) Date of publication of application: **02.01.2004**
(21) Application number: 03007326.6
(22) Date of filing: 01.04.2003
(51) Int. Cl.: B62D 5/04

(54) **Vehicle steering system, steer feel control system and method for providing steer feel**

(30) Priority: 18.06.2002 US 173126
(71) Applicant: Bayerische Motoren Werke Aktiengesellschaft, 80809 München (DE); Delphi Technologies, Inc., Troy, MI 48007-5052 (US)
(72) Inventor: Guldner, Jürgen, 80636 München (DE); Balszuweit, Kai-Uwe, 85630 Grasbrunn (DE); Graef, Michael, 82166 Gräfelfing (DE); Krug, Markus, 80636 München (DE); Smakman, Hendrikus, 80636 München (DE); Schedl, Anton, 80798 München (DE); Bakaus, Slawomir, 81547 München (DE); Ebner, Christian, 80997 München (DE); Mescher, Patrick, Bellbrook, 45305 Ohio (US); Disser, Robert, Dayton, 45419 Dayton (US); Heinrichs, Jeffrey, Dayton, 45429 Ohio (US); Millsap, Scott, Saginaw, 48603 Michigan (US); Murray, Brian, Novi, 48375 Michigan (US); Byers, Michael, Ann Arbor, 48105 Michigan (US); Krukenkamp, Detlef, 85716 Unterschleissheim (DE)
(74) Representative: Schmidt, Günter, Dipl.-Ing.

(57) **Abstract**

A steering system (10) for a vehicle includes a steering handle (12) having a center position, a steer-by-wire system (20), and a steer feel control system (30). The steer-by-wire system senses the position of the steering handle and controls the steering angle of a steerable vehicle wheel as a function of the position of the steering handle. The steer feel control system includes a motor (34) that is operatively associated with the steering handle, and has first and second modes of operation. In the first mode, the steer feel control system applies a force to the steering handle as a function of vehicle's operating condition, and in the second mode, the motor may be shorted. The steer feel control system may also include a spring (38) that biases the steering handle towards to the center position. A method is used to provide steering feel to a steering handle of a vehicle having a steer-by-wire system and a steer feel control system, when the steer feel control system fails. The method may include shorting a motor of the steer feel control system to provide steer feel to the steering handle. The method may also include biasing the steering handle towards its center position using a spring.

## Description

### FIELD OF THE INVENTION

This invention relates to a vehicle steering system, in particular, a steer-by-wire system having steer feel control, and to a method for providing steer feel.

### BACKGROUND OF THE INVENTION

Traditionally, a driver steers a vehicle using a steering wheel that is mechanically linked to the steerable wheels of the vehicle. With the mechanical linkage, the driver, while turning the steering wheel, senses a steer feel that opposes the turning of the steering wheel. The steer feel provides the driver with a sense of the road conditions, such as the traction of the vehicle wheels with the road surface, and with some sense of the condition of the components of the steering system.

Recently, it has been proposed that direct mechanical linkages be replaced by steer-by-wire systems. In a steer-by-wire system, there is no mechanical linkage between the steering wheel and the steerable vehicle wheels. Rather, the angular position of the steering wheel, i.e., how much the steering wheel is turned, is determined by a sensor, and the sensor sends a signal to a controller to control an actuator, which steers the steerable wheels by a predetermined amount in accordance with the angular position of the steering wheel and often with other parameters related to the operating condition of the vehicle.

Steer-by-wire systems have a number of advantages. For example, a steer-by-wire system allows the elimination of a number of bulky and heavy mechanical components. In addition, the relationship between the angular position of the steering wheel and the steering angle of the steerable wheels can be adapted and optimized for different operating conditions of the vehicle.

In a steer-by-wire system, however, the driver does not sense the mechanical steer feel since there is no mechanical linkage between the steering wheel and the steerable vehicle wheels. Most drivers, accustomed to mechanical steering system, may find the lack of steer feel objectionable, since steer feel, as stated above, provides the driver with information on the operating condition of the vehicle, allowing the driver to make proper vehicle maneuvers.

A number of systems have been proposed to provide steer feel to the steering wheel in a steer-by-wire system. For example, an actuator, connected to the steering wheel, may be provided to apply a torque to the steering wheel in accordance with the operating condition of the vehicle. The torque is controlled to provide the driver with a sensation similar to the one he would experience while driving a vehicle having a conventional mechanical steering system.

### SUMMARY OF THE INVENTION

Because of the importance of steer feel to the driver, it is essential that steer feel control systems operate with high reliability. The steer feel control systems, as well as methods for providing steer feel, of the present invention have a higher reliability than conventional steer feel control systems. In a conventional steer feel control system, there is no steer feel at all if the control system fails. In the steer feel control system of the present invention, on the other hand, a back-up system still provides some steer feel even if the control system fails to operate in the normal manner. In other words, with the steer feel control system of the present invention, it is much less likely that a driver would experience the disruption of the complete loss of steer feel.

In accordance with one aspect of the invention, a steering system for a vehicle includes a steering handle having a center position, a steer-by-wire system, and a steer feel control system. The steer-by-wire system senses the position of the steering handle and controls the steering angle of a steerable vehicle wheel as a function of the position of the steering handle. The steer feel control system applies a force to the steering handle and includes a spring that biases the steering handle towards to the center position.

In accordance with another aspect of the invention, a steering system for a vehicle includes a steering handle having a center position; a steer-by-wire system, and a steer feel control system. The steer-by-wire system senses the position of the steering handle and controls the steering angle of a steerable vehicle wheel as a function of the position of the steering handle. The steer feel control system includes a motor operatively associated with the steering handle and has first and second modes of operation. In the first mode, the steer feel control system applies a force to the steering handle as a function of the vehicle's operating condition. In the second mode, the motor is shorted.

In accordance with yet another aspect of the invention, a system, used to provide steering feel to a steering handle of a vehicle having a steer-by-wire system, includes a spring that is operatively associated with the steering handle. The spring biases the steering handle towards to the center position of the steering handle.

In accordance with still another aspect of the invention, a system, used to provide steering feel to a steering handle of a vehicle having a steer-by-wire system, includes a motor that is operatively associated with the steering handle and has first and second modes of operation. In the first mode, the steer feel control system applies a force to the steering handle as a function of the vehicle's operating condition, and in a second mode, the motor is shorted.

In accordance with a further aspect of the invention, a method, used to provide steering feel to a steering handle of a vehicle having a steer-by-wire system, includes the act of biasing the steering handle towards its center position using a spring.

In accordance with a yet further aspect of the invention, a method is used with a vehicle having a steer-by-wire system and a steer feel control system, to provide steering feel to the steering handle when the steer feel control system fails. The method includes shorting a motor of the steer feel control system to provide steer feel to the steering handle.

Other objects, advantages and novel features of the present invention will become apparent from the following detailed description of the invention when considered in conjunction with the accompanying drawings.

### BRIEF DESCRIPTION OF THE DRAWINGS

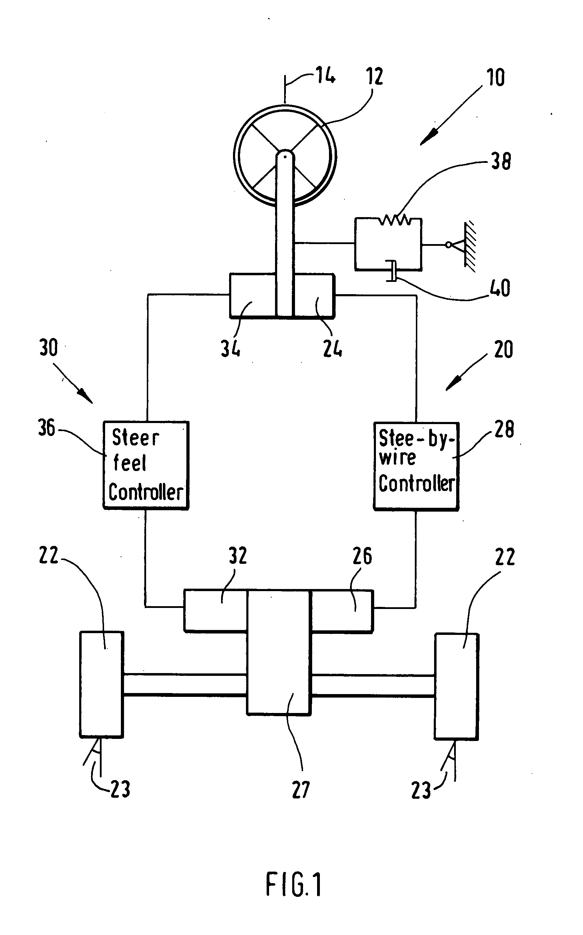

Figure 1 is a schematic drawing of a vehicle steering system of the present invention.

### DETAILED DESCRIPTION OF PREFERRED EMBODIMENTS

Figure 1 illustrates a vehicle steering system of the present invention. The vehicle steering system 10 includes a steering handle 12, a steer-by-wire system 20, and a steer feel control system 30. The steering system 10 controls the steering angle 23 of the vehicle's steerable wheel or wheels 22 in accordance with the position of the steering handle 12 and, preferably, other parameters related to the vehicle's operating condition.

The steering system 10 can be used in a vehicle of any suitable type. For example, it can be used in a passenger car, a truck, a recreational vehicle, an off-road vehicle, or a military vehicle. The vehicle may have any number of steerable wheels, such as one, two or four steerable wheels.

The steering handle 12 of the steering system 10 is used by the driver to steer the vehicle. The steering handle 12 has a center position 14, and when the steering handle 12 is at the center position 14, the steering angle 23 of the steerable wheels 22 is zero, and the vehicle travels along a straight line. A steering handle of the present invention can be a steering wheel that rotates with respect to its axis, and the angular position of the steering wheel is used to control the steering angle of the steerable wheels. Other types of steering handles may also be used in a steering system of the present invention, including a steering handle that moves linearly.

The steer-by-wire system of the present invention may be any suitable steer-by-wire system. The steer-by-wire system 20 illustrated in Figure 1, for example, includes a position sensor 24 that senses the position of the steering handle 12, an actuator 26 for adjusting the steering angle 23 of the steerable wheels 22, and a controller 28 that controls the actuator 26 to adjust the steering angle 23 of the steering wheels 22 in accordance with the position of the steering handle 12. The actuator 26 may be an electric, hydraulic or pneumatic actuator, and it may also be a linear or rotary actuator. Preferably, other parameters related to the vehicle's operating condition are also used by the controller 28 to control the steering angle 23. These parameters can be provided by one or more suitable sensors (not shown). In some cases, the actuator 26 does not directly steer the steerable wheels 22. Instead, a gearbox 27, or a similar mechanism, is placed between the actuator 26 and the steerable wheels. The gearbox 27 can be used to increase the force or torque generated by the actuator 26, allowing the use of a smaller actuator.

The steer feel control system 30 includes one or more sensors 32 for sensing parameters related to the operating condition of the vehicle, one or more motors 34 operatively associated with the steering handle 12, and a controller 36 that receives the signals from the one or more sensors 32 and controls the one or more motors 34 to apply a force to the steering handle 12. The force is controlled to provide steer feel. The term "force" is broadly defined. If the steering handle is a steering wheel that rotates about its axis, the term "force," as defined herein, means "torque." If the steering handle has a linear movement, the term "force" has its conventional meaning.

The parameters sensed by the sensors 32 may include any parameters that may be useful to provide a realistic steer feel, such as the torque applied to the steerable wheels 22 by the steer-by-wire system 20. The system 30 may include one motor, or two motors to provide for increased system safety. The two motors may be used at the same time, or alternatively, the second motor may be used only if the first motor fails. The motors may be the same type or different types and may have the same or different power ratings. The motors preferably are permanent magnet electric motors, although each motor may be of any suitable type, such as an electric motor of another type, a hydraulic motor, or a pneumatic motor.

The steer feel control system 30 preferably has two modes of operation. In the first mode, the controller 36 receives the signals from the sensors 32 and controls the motor 34 to apply a force to the steering handle 12 to provide steer feel. The system 30 enters the second mode in case of system failure when the system 30 can no longer provide proper steer feel. The system 30 may fail for a number of reasons. For example, one or more of the sensors 32 and motors 34 may fail, or the controller 36 may fail. However, if it has more than one motor, the system preferably does not enter the second mode when at least one motor is working properly to provide steer feel even if the other motors have failed.

In the second mode, the steer feel control system 30 preferably is configured in a suitable manner to provide some steer feel even though the system 30 can no longer control steer feel as it does in the first mode. In a preferred embodiment of the invention, this "some" steer feel is provided by shorting the motors 34 to provide "braking" (or damping). If the steer feel control system 30 uses a permanent magnet electric motor or a hydraulic or pneumatic motor, the definition of the term "shorting" is generally defined as follows. With respect to a permanent magnet electric motor, the term means shorting a winding (or windings) of the motor with or without a resistive circuit. If the electric motor is a three-phase motor, two windings of the motor may be shorted against each other. With respect to a hydraulic or pneumatic motor, the term generally means that a direct connection is provided between the inlet and outlet of the motor, using a tube having an orifice, for example, so that fluid flows out of the outlet, through the tube and the orifice, and into the inlet. Of course, any other means for creating a "braking" (damping) effect using the motor would also be considered a "shorting" of the motor.

In the second mode when the steer feel control system 30 fails, the steer feel provided by the system 30 is not as realistic as that provided in the first mode. Using a steer feel control system having a shorted permanent electric motor as an example, the steer feel provided in the second mode is a force that is proportional to the speed at which the steering handle 12 is moved (or a torque that is proportional to the speed at which the steering wheel is turned). In other words, the steer feel control system is functioning as a damper. Although this steer feel is not as realistic as that provided in the first mode, it is still a significant improvement over conventional steer feel control systems which provide no steer feel at all when the system fails.

In a steer feel control system that uses a permanent magnet electric motor, the motor is preferably shorted using a resistive circuit, and the resistance of the resistive circuit may be adjusted during operation in accordance with the operating condition of the vehicle to provide a more realistic steer feel. If the steer feel control system uses a three-phase motor, two windings of the motor preferably are shorted against each other with a resistive circuit, and the resistance of the resistive circuit may be similarly adjusted during operation. If the steer feel control system uses two or more motors, only the windings of the motor that failed last preferably is shorted, although the windings of more than one motor may be shorted.

In a steer feel control system that uses a hydraulic or pneumatic motor, the motor may be shorted in the second mode by connecting the inlet and outlet of the motor using a tube having an orifice. The size of the orifice can be adjusted during operation in accordance with the operating condition of the vehicle to provide a more realistic steering feel.

In addition to, or as an alternative to, the shorted motor, a solution is proposed to arrange a spring in series or in parallel with the motors. In other words, the steer feel control system 30 may include a spring 38 connected to the steering handle 12, which spring may be arranged in series or in parallel with the motors 34 of the steer feel control system 30. The solution to arrange the spring in parallel is a good approach. The solution to arrange the spring in series, in some cases, may be more difficult technically, because the motor may need to constantly work against the flexible spring during normal operation. The spring 38 applies a force to the steering handle 12 that biases the steering handle 12 to its center position 14. In other words, the spring force is proportional to the position of the steering handle 12 and tends to return the steering handle 12 to its center position 14. In this way, the spring 38 provides a steer feel even when the steer feel control system 30 fails. The spring 38 preferably generates sufficient torque to overcome any friction in the system. In some embodiment, the type of spring may be any mechanical combination of mechanical spring along with transmission to attain the required level of force or moment.

In addition to the spring 38, the steer feel control system 30 may include a mechanical damper 40 that is arranged in parallel with the spring 38. The mechanical damper 40 may include a certain amount of hysteresis, such as coulomb friction, to simulate the effect of hysteresis in a conventional steering system. The existence of hysteresis in a conventional steering system is evidenced by the fact that when it is turned in one direction and then released, the steering wheel will move towards the center position but will stop short of the center position. This phenomenon is especially evident when the vehicle is operated at a low speed.

In operation, the steer feel control system 30 normally operates in the first mode, in which the controller 36 of the system 30 receives signals related to the operating condition of the vehicle from the sensors 32 of the system 30 and controls the motor 34 of the system 30 to provide steer feel to the steering handle 12. If the system 30 fails, the system 30 enters the second mode, in which the motor 34 of the system 30 may be shorted to provide some steer feel to the steering handle 12. The shorted motor 34 provides a force to the steering handle 12, which force is proportional to the speed, at which the steering handle 12 is moved. The motor 34 may be shorted using a resistive circuit, and the resistance of the circuit may be adjusted in accordance with the operating condition of the vehicle. The system 30 may include a spring 38 that is operatively associated with the steering handle 12 and biases the steering handle 12 towards to the center position 14. In addition to the spring 38, a mechanical damper 40 may be provided, which provides a damping force to the steering handle 12. The system 30 may return to the first mode, when the system 30 recovers and begins to operate properly.

The foregoing description constitutes the preferred embodiments devised by the inventors for practicing the invention. It is apparent, however, that the invention is susceptible to modification, variation and change that will be obvious to those skilled in the art. Inasmuch as the foregoing description is intended to enable one skilled in the pertinent art to practice the invention, it should not be construed to be limited thereby but should be construed to include such aforementioned obvious variations and be limited only by the proper scope or fair meaning of the accompanying claims.

## Claims

1. A steering system for a vehicle having a steerable vehicle wheel, the system comprising:
a steering handle having a center position;
a steer-by-wire system that senses the position of the steering handle and controls a steering angle of the steerable vehicle wheel as a function of the position of the steering handle; and
a steer feel control system that applies a force to the steering handle, the steer feel control system including a spring that biases the steering handle towards the center position.

2. The steering system of claim 1, wherein the steer feel control system further includes a damper arranged in parallel with the spring.

3. The steering system of claim 2, wherein the damper is a non-linear damper having hysteresis.

4. The steering system of claim 3, wherein the hysteresis includes coulomb friction.

5. A steering system for a vehicle having a steerable vehicle wheel, the system comprising:
a steering handle having a center position;
a steer-by-wire system that senses the position of the steering handle and controls a steering angle of the steerable vehicle wheel as a function of the position of the steering handle; and
a steer feel control system including a motor operatively associated with the steering handle, the steer feel control system having first and second modes of operation, wherein in the first mode, the steer feel control system applies a force to the steering handle as a function of vehicle's operating condition, and in the second mode, the motor is shorted.

6. The steering system of claim 5, wherein the motor is a permanent magnet electric motor, and at least one winding of the motor is shorted in the second mode.

7. The steering system of claim 6, wherein the motor is a three-phase motor, and two windings of the motor are shorted against each other in the second mode.

8. The steering system of claim 6 or 7, wherein the winding is, or the windings are, shorted via a resistive circuit in the second mode.

9. The steering system of claim 8, wherein the resistance of the resistive circuit is varied in accordance with the vehicle's operating condition.

10. The steering system of any one of claims 5 to 9, wherein the steer feel control system further includes a spring that biases the steering handle towards to the center position.

11. The steering system of claim 10, wherein the spring is arranged in parallel with the motor.

12. The steering system of claim 10, wherein the spring is arranged in series with the motor.

13. The steering system of any one of claims 5 to 12, wherein the steer feel control system includes two motors to provide a higher safety margin, and the steer feel control system enters the second mode when both motors fail.

14. The steering system of claim 13, wherein the two motors are of different types.

15. The steering system of claim 13 or 14, wherein only the winding of the motor that fails last is shorted in the second mode.

16. A system for providing steering feel to a steering handle of a vehicle having a steer-by-wire system, the system comprising:
a spring operatively associated with the steering handle, the spring biasing the steering handle towards to a center position of the steering handle.

17. The system of claim 16 further comprising a damper arranged in parallel with the spring.

18. The system of claim 17, wherein the damper is a non-linear damper having hysteresis.

19. A system for providing steering feel to a steering handle of a vehicle having a steer-by-wire system, the system comprising;
a motor operatively associated with the steering handle;
a first mode of operation, in which the steer feel system applies a force to the steering handle as a function of the vehicle's operating condition; and
a second mode of operation, in which the motor is shorted.

20. The system of claim 19, wherein the motor is a permanent magnet electric motor, and at least one winding of the motor is shorted.

21. The system of claim 20, wherein the motor is a three-phase motor, and the two windings of the motor are shorted against each other.

22. The system of claim 20 or 21, wherein the winding is, or the windings are, shorted via a resistive circuit.

23. The system of claim 22, wherein the resistance of the resistive circuit is varied in accordance with the vehicle's operating condition.

24. The system of any one of claims 20 to 23, wherein the steer feel control system includes two motors to provide redundancy, and the steer feel control system is in the second mode when both motors fail to apply the force.

25. The system of claim 24, wherein the two motors are of different types.

26. The system of claim 24 or 25, wherein only the winding of the motor that fails last is shorted.

27. The system of any one of claims 19 to 26 further comprising a spring that biases the steering handle towards the center position.

28. A method for providing steering feel to a steering handle of a vehicle having a steer-by-wire system, the method comprising the act of:
biasing the steering handle towards its center position using a spring.

29. The method of claim 28 further comprising damping movement of the steering handle using a damper arranged in parallel with the spring.

30. The method of claim 29 further comprising damping movement of the steering handle non-linearly using a damper having hysteresis.

31. A method for providing steering feel to a steering handle of a vehicle having a steer-by-wire system and a steer feel control system, when the steer feel control system fails, the method comprising:
shorting a motor of the steer feel control system to provide steer feel to the steering handle.

32. The method of claim 31, wherein the motor is a permanent magnet electric motor, and shorting the motor of the steer feel control system includes shorting a winding of the permanent magnet electric motor.

33. The method of claim 32, wherein the motor is a three-phase motor, and shorting a winding of the permanent magnet electric motor includes shorting two windings of the motor against each other.

34. The method of claim 32 or 33, wherein shorting the winding or windings includes shorting the winding or windings using a resistive circuit.

35. The method of claim 34 further comprising varying the resistance of the resistive circuit in accordance with the vehicle's operating conditions.

36. The method of any one of claims 31 to 35 further comprising biasing the steering handle towards its center position using a spring.
